(19) [European Patent Office logo] Europäisches Patentamt / European Patent Office / Office européen des brevets

(11) **EP 3 625 926 B1**

(12) **EUROPEAN PATENT SPECIFICATION**

(45) Date of publication and mention
of the grant of the patent:
**28.09.2022   Bulletin 2022/39**

(21) Application number: **17728854.5**

(22) Date of filing: **09.06.2017**

(51) International Patent Classification (IPC):
**H04L 9/08** (2006.01)

(52) Cooperative Patent Classification (CPC):
**H04L 9/0855**

(86) International application number:
**PCT/EP2017/064118**

(87) International publication number:
**WO 2018/224164 (13.12.2018 Gazette 2018/50)**

(54) **QUANTUM KEY DISTRIBUTION NETWORK**

QUANTENSCHLÜSSELVERTEILUNGSNETZ

RÉSEAU DE DISTRIBUTION DE CLÉ QUANTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.03.2020   Bulletin 2020/13**

(73) Proprietor: **Huawei Technologies Duesseldorf
GmbH
40549 Düsseldorf (DE)**

(72) Inventors:
• **QIAN, Yi
80992 Munich (DE)**
• **FUNG, Fred, Chi, Hang
80992 Munich (DE)**

(74) Representative: **Thun, Clemens et al
Mitscherlich PartmbB
Patent- und Rechtsanwälte
Sonnenstraße 33
80331 München (DE)**

(56) References cited:
**CN-B- 103 200 105     GB-A- 2 471 470
GB-A- 2 534 917**

• **BAYRAMPOUR HOJAT ET AL: "Optimization of
quantum networks using novel non-blocking
optical switches", OPTICAL SWITCHING AND
NETWORKING, ELSEVIER, NL, vol. 22, 17 May
2016 (2016-05-17), pages 69-76, XP029789639,
ISSN: 1573-4277, DOI:
10.1016/J.OSN.2016.05.003**
• **CHAPURAN T E ET AL: "Compatibility of
quantum key distribution with optical
networking", VISUAL COMMUNICATIONS AND
IMAGE PROCESSING; 20-1-2004 - 20-1-2004;
SAN JOSE,, vol. 5815, no. 164 (2005), 2 June 2005
(2005-06-02), pages 164-175, XP002602792, DOI:
10.1117/12.603640 ISBN: 978-1-62841-730-2**
• **HAO WEN ET AL: "An evaluation model of the
optical quantum communication network",
INFORMATION, COMPUTING AND
TELECOMMUNICATION, 2009. YC-ICT '09. IEEE
YOUTH CONFERENCE ON, IEEE, PISCATAWAY,
NJ, USA, 20 September 2009 (2009-09-20), pages
50-53, XP031611870, ISBN: 978-1-4244-5074-9**

**Description**

TECHNICAL FIELD

In general, the present invention relates to the field of quantum key distribution (QKD). In particular, the present invention relates to a QKD network architecture.

BACKGROUND

Quantum key distribution defines a technique of distributing secret random bits (used as a pair of key for symmetric data encryption/decryption) between two parties by means of quantum approaches (see "The security of practical quantum key distribution", Rev. Mod. Phys. 81, 1301). The secrecy of the key against eavesdropping is guaranteed by the laws of quantum physics. A one-way QKD system is used in optical domain and consists of a quantum channel (one way direction) and a classical channel (bi-directional), where a quantum optical pulse is sent and detected on the quantum channel and the classical channel is used by the post processing for communication in order to get the final secret key.

However, due to the non-cloning theorem of quantum physics, the weak quantum signal cannot be amplified as the traditional optical signal. Therefore, the transmission distance of a signal in QKD is limited.

In commonly used QKD networks, the QKD transmitters and QKD receivers are assigned in such a way that each communication link section of the QKD network comprises a pair of a QKD transmitter and a QKD receiver. Typical examples of such commonly used QKD networks are the so-called SECOQC Vienna QKD network (see "The SECOQC quantum key distribution network in Vienna", New Journal of Physics 11 ) and the so-called Tokyo QKD network (see "Field test of quantum key distribution in the Tokyo QKD Network", 075001Vol. 19, No. 11 / OPTICS EXPRESS 10387).

However, such conventional network topologies have the following disadvantage. If the network topology consists of a total number L of nodes, then the total number of QKD transmitters (QTx) could be at most L*(L-1)/2 and the total number of QKD receiver (QRx) could be at most L*(L-1)/2, depending on the topology of the QKD network. Therefore, in the case of a fully meshed topology with L nodes, where L is large, the number of QTx and RTx pairs would increase as L^2 leading to very high resource costs.

In the work "A quantum access network", VOL 501, NATURE, 69 a QKD network scheme which allows to save costs is published, in which the authors use multiple transmitters and let them share a common receiver by using an 1xN splitter or replacing the 1xN splitter by a wavelength division multiplexing (WDM) module in a tree topology network.

The document Bayrampour Hodjat et al.: "Optimization of quantum networks using novel non-blocking optical switches"shows the use of 2x2 and 4x4 quantum switches for switching in optic networks.

The document Chapurant E et al.: "Compatibility of quantum key distribution with optical networking" shows a system and method for quantum key distribution in optical networks.

The document GB 2471470 A shows a quantum repeater system and method for creating extended entanglements. Especially, here quantum repeaters for repeating quantum entangled signals within an optical network are shown.

The document CN 103 200 105 B shows a routing system and a routing method for a quantum key distribution network based on optical path switching.

GB 2 534 917 A shows a quantum communication system and method. Especially, the use of passive splitters and of 1xN switches is shown.

The document Hao Wen: "An Evaluation Model of the optical quantum communication network" shows different quantum key distribution schemes.

However, the scheme mentioned above only solves the QKD network cost issues in a tree-like QKD network topology, but the cost issues concerning the QKD devices in an arbitrary network topology are not mitigated.

Thus, there is a need for an improved quantum key distribution (QKD) network having an arbitrary topology with reduced cost.

SUMMARY

It is an object of the invention to provide for an improved quantum key distribution (QKD) network having an arbitrary topology with reduced cost.

Embodiments labeled as inventive embodiments, shown in the following, which are not covered by the scope of protection afforded by the independent claims are to be considered as examples helpful for understanding the invention, but not as embodiments of the invention.

The foregoing and other objects are achieved by the subject matter of the independent claims. Further implementation forms are apparent from the dependent claims, the description and the figures.

According to a first aspect, the invention relates to a quantum key distribution (QKD) network, comprising a plurality of network nodes, and a plurality of communication links connecting the plurality of network nodes, wherein the plurality of network nodes and the plurality of communication links define a network topology, and wherein at least a first network node of the plurality of network nodes comprises a transmitter and a first KxM or MxK optical switch connected to the transmitter and wherein at least a second network node of the plurality of network nodes comprises a receiver and a second PxN or NxP optical switch connected to the receiver, wherein the first optical switch is connected to the second optical switch via one of the plurality of communication links in order to allow a communication between the transmitter of the first network node and the receiver of the second network node such that the first network node and the second network node share

the transmitter and the receiver, and wherein K, P, M, and N are positive integer numbers. In embodiments of the invention, the first KxM or MxK optical switch and the second PxN or NxP optical switch may be wavelength-independent active optical switches. At least one subset of the plurality of network nodes forms an odd cycle, an odd cycle being a closed sequence of connected nodes, wherein at least a third network node in the odd cycle comprises a transmitter and a receiver, wherein anyone of the transmitter and receiver is directly connected to a respective optical switch of a neighboring node. The first optical switch and/or the second optical switch is a wavelength independent active optical switch. Each of the plurality of network nodes comprises a receiver, a transmitter or a receiver and a transmitter and wherein the number of receivers and the number of transmitters of each network node is determined by a configuration scheme as a function of the network topology, wherein the configuration scheme is based on a minimization problem which is configured to provide the minimal number of receivers and transmitters in the QKD network under the constraint that each basic odd cycle of the QKD network contains at least one node having a transmitter and a receiver. The configuration scheme is based on the following minimization problem:

$$\min \sum_{j=1}^{K} x_j$$ , such that $\sum_{j \in S_i} x_j \geq 1$ for $i = 1, ..., N$ and $x_j = 0,1$ for $j = 1, ..., K$ $K$ is the number of the plurality of network nodes, $N$ is the number of all basic odd cycles in the QKD network, $S_i$ is a set of network nodes forming a basic odd cycle of the QKD network, and $x_j = 0$ indicates that the -th network node of the plurality of network nodes (101, 103, 105, 107) comprises one transmitter and no receiver or one receiver and no transmitter and $x_j = 1$ indicates that the -th network node of the plurality of network nodes (101, 103, 105, 107) comprises one transmitter and one receiver.

It can be understood that the transmitter of the first network node is configured to communicate with the respective receivers of M adjacent network nodes in different time slots via the first KxM or MxK optical switch, and the receiver of the second network node is configured to communicate with the respective transmitters of N adjacent network nodes in different time slots via the second PxN or NxP optical switch.

Thus, a QKD network with an improved architecture is provided, which requires less receivers and/or transmitters than conventional QKD networks and, thus, substantially reduces the costs for hardware resources.

In a possible implementation form of the QKD network according to the first aspect, at least a third network node of the plurality of network nodes comprises a transmitter, a receiver and at least one optical switch, in particular, at least one wavelength-independent active optical switch.

Thus, an improved architecture for a QKD network with at least one optical switch is provided. In particular, by using the wavelength-independent active optical switch, the QKD transmitter does not need to tune to a particular frequency in order for the transmitted signals to be routed by the wavelength-independent active optical switch.

In another possible implementation form of the QKD network according to the first aspect, the plurality of network nodes further comprises a set of neighboring receiver nodes and transmitter nodes, wherein the neighboring receiver nodes and transmitter nodes are arranged in an alternating fashion. In other words, the arrangement is given by the sequence transmitter (T), receiver (R), T, R, T, R, T, R...

In another possible implementation form of the QKD network according to the first aspect, the QKD network further comprises a control unit configured to control the operation of the plurality of network nodes on the basis of a time-division multiplexing scheme.

Thus, an improved QKD network is provided, which reduces the costs for the hardware resources of the QKD transmitters and receivers.

The invention can be implemented in hardware and/or software.

BRIEF DESCRIPTION OF THE DRAWINGS

Further embodiments of the invention will be described with respect to the following figures, wherein:

Figure 1 shows a schematic diagram of a quantum key distribution network according to an embodiment;

Figure 1a shows an exemplary time slot allocation table used for communication links of the quantum key distribution network of figure 1 according to an embodiment;

Figure 2 shows a schematic diagram of a quantum key distribution network according to another embodiment;

Figure 2a shows an exemplary time slot allocation table used for communication links of the quantum key distribution network of figure 2 according to an embodiment;

Figure 3 shows a schematic diagram of a quantum key distribution network according to another embodiment;

Figure 3a shows an exemplary time slot allocation table for communication links of the quantum key distribution network of figure 3 according to an embodiment; and

Figure 4 shows a schematic diagram of a method for determining the configuration of a quantum key distribution network according to an embodiment.

In the various figures, identical reference signs will be used for identical or at least functionally equivalent features.

## DETAILED DESCRIPTION OF EMBODIMENTS

In the following description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

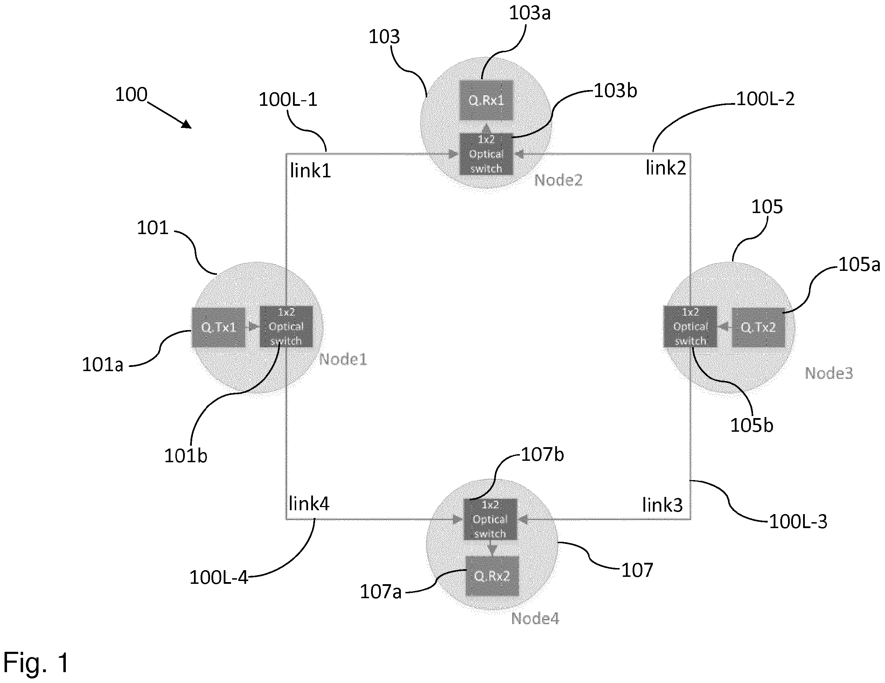

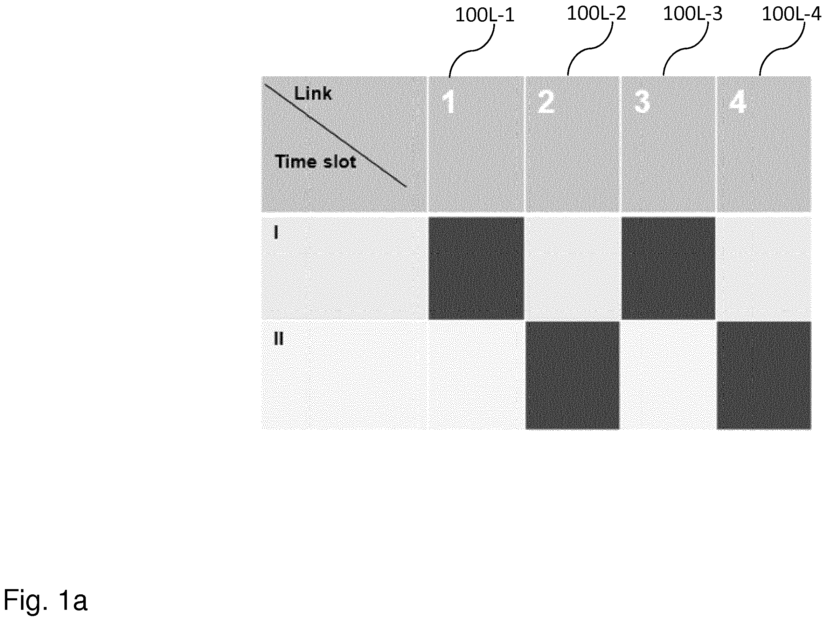

Figure 1 shows a schematic diagram of a quantum key distribution network 100 according to an embodiment.

The quantum key distribution (QKD) network 100 comprises a plurality of network nodes 101, 103, 105, and 107, and a plurality of communication links 100L-1, 100L-2, 100L-3, and 100L-4 connecting the plurality of network nodes 101, 103, 105, and 107. As will be appreciated, the plurality of network nodes 101, 103, 105, and 107, and the plurality of communication links 100L-1, 100L-2, 100L-3, and 100L-4 define a network topology. At least a first network node 101 of the plurality of network nodes comprises a transmitter 101a and a first $1\times2$ optical switch 101b connected to the transmitter 101a and at least a second network node 103 of the plurality of network nodes comprises a receiver 103a and a second 1x2 optical switch 103b connected to the receiver 103a, in particular, in one example, the first $1\times2$ optical switch 101b and the second $1\times2$ optical switch 103b may be replaced with a first 2x2 optical switch and a second 2x2 optical switch respectively, which are not illustrated in Fig.1, in which one input port is unused. Here, 2x2 means the respective optical switch has 2 input ports and 2 output ports. Clearly, the present invention is not limited to $1\times2$ or 2x2 optical switches and the skilled person understands that optical switches with an arbitrary number of input and output ports may be used.

The first optical switch 101b is connected to the second optical switch 103b via one of the plurality of communication links 100L-1 in order to allow the communication between the transmitter 101a of the first network node 101 and the receiver 103a of the second network node 103 such that the first network node 101 and the second network node 103 share the transmitter 101a and the receiver 103a.

Similarly, the network node 105 comprises a transmitter 105a and a 1x2 switch 105b, where the switch 105b is connected to the switch 103b of the network node 103 via the communication link 100L-2 and to the switch 107b of the network node 107 via the communication link 100L-3.

Moreover, the switch 101b of the network node 101 is connected to the switch 107b of the network node 107 via the communication link 100L-4, in such a way the communication between the transmitter 101a of the network node 101 and the receiver 107a of the network node 107 can be established.

In embodiments of the invention, the distribution of the QKD devices (receivers, transmitters and switches) in an arbitrary QKD network topology may satisfy at least one of the following conditions:

1st: At least one QKD transmitter or one QKD receiver is placed at one of the plurality of network nodes;

2nd: At most one QKD transmitter and one QKD receiver are placed at one of the plurality of network nodes;

3rd: Any QKD transmitter in a given node is linked to all the M QKD receivers of adjacent nodes via a KxM wavelength-independent active optical switch, wherein KxM means that the switch has K input ports and M output ports, and vice versa for a MxK switch; and

4th: Any QKD receiver in a given node is linked to all the N QKD transmitters of its adjacent nodes via an PxN wavelength-independent active optical switch, wherein PxN means that the switch has P input ports and N output ports, and vice versa for a NxP switch, wherein K, P, M, and N can be any positive integer numbers, i.e. K, P, M, N =1, 2, 3 or 4....

In embodiments of the invention the communication links 100L-1, 100L-2, 100L-3, and 100L-4 can be optical fibers.

The embodiment shown in Fig. 1 provides the advantage of reducing the total number of QKD transmitters from four to two, namely the transmitters 101a and 105a, and of reducing the total number of the QKD receivers from four to two, namely the receivers 103a and 107a, compared to conventional methods of the prior art, while adding four 1×2 optical switches 101b, 103b, 105b and 107b. This provides the advantage of reducing the cost issues of the QKD devices in the multi-node QKD network 100.

Moreover, in embodiments of the invention, some of the plurality of the communication links 100L-1, 100L-2, 100L-3, and 100L-4 can work simultaneously. In particular, a time-division multiplexing scheme can be used to assign which communication links operate simultaneously.

More specifically, in one example, the time-division multiplexing scheme can be defined or represented by a time slot allocation table, which can contain all the combinations of the communication links 100L-1, 100L-2, 100L-3, and 100L-4 which can operate simultaneously. In an embodiment, each combination corresponds to a row in the time slot allocation table indicating which of the communication links can operate simultaneously.

In order to determine the time slot allocation table, in a first step, a link elimination table is constructed which contains the communication links that may not operate simultaneously. This information can directly be obtained from the definition of the topology of the QKD network 100.

An exemplary link elimination table is given in the following table 1, with M=3, wherein M indicates a number of communication links. The link elimination table is obtained as follows. When a network node A operates in a QKD scheme with a neighboring node, which has a particular transmitter/receiver (Tx/Rx) configuration, the communication links connecting to all neighboring network nodes of the network node A (having the same Tx/Rx configuration) are disabled.

Table 1: Exemplary link elimination table. In this example, using link 1 disallows the use of links 2 and 3; using links 2 and 3 simultaneously is possible.

| Link Link | 1 | 2 | 3 |
|---|---|---|---|
| 1 | | X | X |
| 2 | X | | |
| 3 | X | | |

Once the link elimination table 1 is obtained, an algorithm can be used to find the table for the links that can simultaneously operate, i.e. the time slot allocation table.

In embodiments of the invention, the time slot allocation table is generated on the basis of the following algorithm, assuming that the QKD network 100 has a number M of communication links:

```
// Final table indexed by T[row][link]
Var T[][]

// Kick start the table filling
row=1
Initialize T[row][links] = ? for all links
fill_link(row,1)

func fill_link(row,link)
{
        if (link > M)
                return
        end if
        if (T[row][link]==?)
                // split row and proceed with two cases:
                // use and not use the current link
                duplicate_row(row)
```

```
                    // case 1: use
                    set T[row][link]=1
                    // use elimination table to eliminate incompatible links in current row
                    eliminiate_links(row,link)
                    fill_link(row,link+1)


                    // case 2: not use
                    set T[row+1][link]=0
                    fill_link(row+1,link+1)


            else if (T[row][link]==0)
                    fill_link(row,link+1)
            end if
        }



        func eliminiate_links(row,link)
        {
                Look up table E and set T[row][l]=0 for all links l incompatible with link
        }


        func duplicate_row(row)
        {
                Add one row to T
                Copy T[row] to T[row+1]
        }
```

The basic idea behind the above shown algorithm is to loop through all combinations of using different communication links simultaneously, eliminating combinations that contain incompatible communication links (i.e., communication links that cannot be used simultaneously as indicated by the link elimination table above).

In particular, in the embodiment shown in Fig. 1, the communication links 100L-1 and 100L-3, and the communication links 100L-2 and 100L-4 can work simultaneously during the time slots I and II, respectively, as shown in Fig. 1a by the black blocks of the time slot allocation table.

This embodiment provides the advantage of minimizing the total number of transmitters and receivers of the QKD network 100. This is due to the fact that, a QKD scheme may not operate 24-hour per day for each communication link 100L-1, 100L-2, 100L-3 and 100L-4 within the QKD network 100 and, therefore, the transmitters 101a and 105a and receivers 103a and 107a can be interconnected by switches 101b, 103b, 105b and 107b, and the communication links 100L-1, 100L-2, 100L-3 and 100L-4 can share the QKD equipment (transmitters, receivers, switches) in different time slots, e.g. I and II, according to their needs.

In an embodiment, the QKD network 100 further comprises a control unit configured to control the operation of the plurality of network nodes 101, 103, 105, 107 on the basis of the time-division multiplexing scheme defined by the time slot allocation table of figure 1a. Specifically, the control unit controls the optical switch directly by selecting which input and output ports of the optical switch are connected. For example, the connection can be established by giving electronic signals to the optical switch.

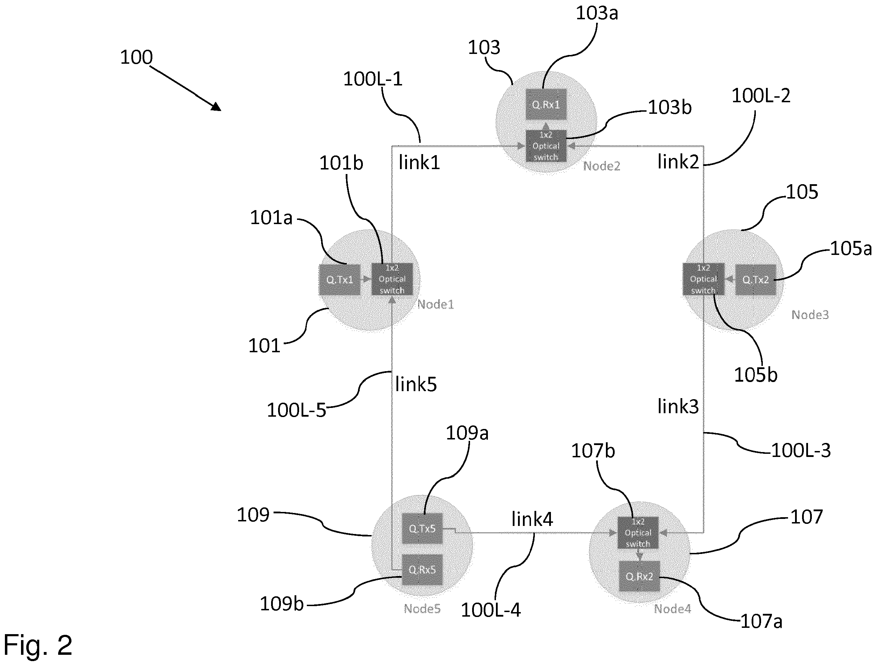

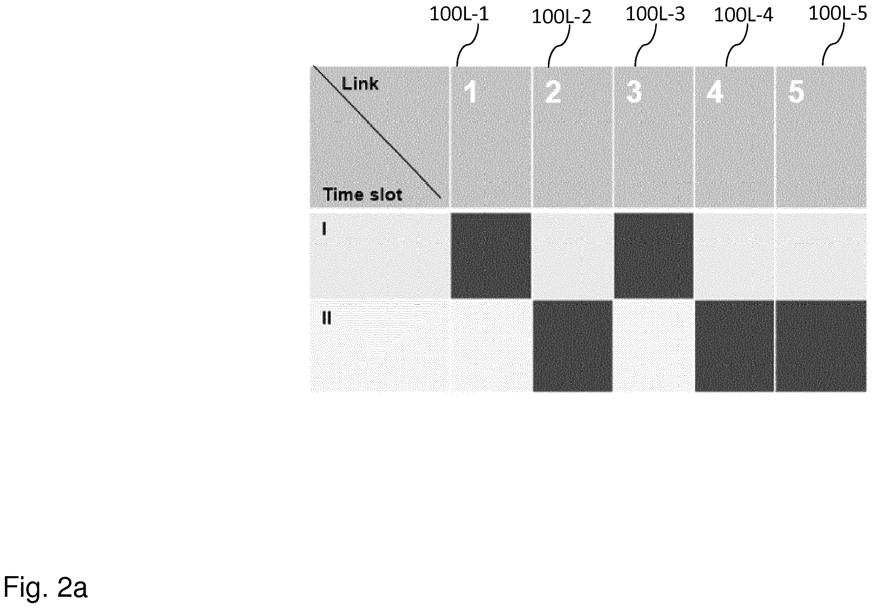

Figure 2 shows a schematic diagram of the quantum key distribution network 100 according to a further embodiment. In the embodiment shown in Fig. 2, the QKD network 100 comprises five network nodes 101, 103, 105, 107, and 109 and has a ring shape.

This embodiment provides the advantage of reducing the total number of QKD transmitters from five to three, namely the transmitters 101a, 105a and 109a, and of reducing the total number of the QKD receivers from five to three, namely the receivers 103a, 107a and 109b, compared to the prior art QKD networks, while adding four 1x2 optical switches 101b, 103b, 105b, and 107b. It can be noted that an optical switch costs much less than a QKD transmitter or QKD receiver. In particular, four optical switches cost much less than two QKD transmitters and two QKD receivers.

Analogously to the embodiment shown in Figs. 1 and 1a, in this case as well, there are some time slots during which some communication links can operate simultaneously. In particular, the communication links 100L-1 and 100L-3, and the communication links 100L-2, 100L-4 and 100L-5 can work simultaneously during the time slots I and II, respectively, as shown in Fig. 2a by the black blocks in the time slot allocation table.

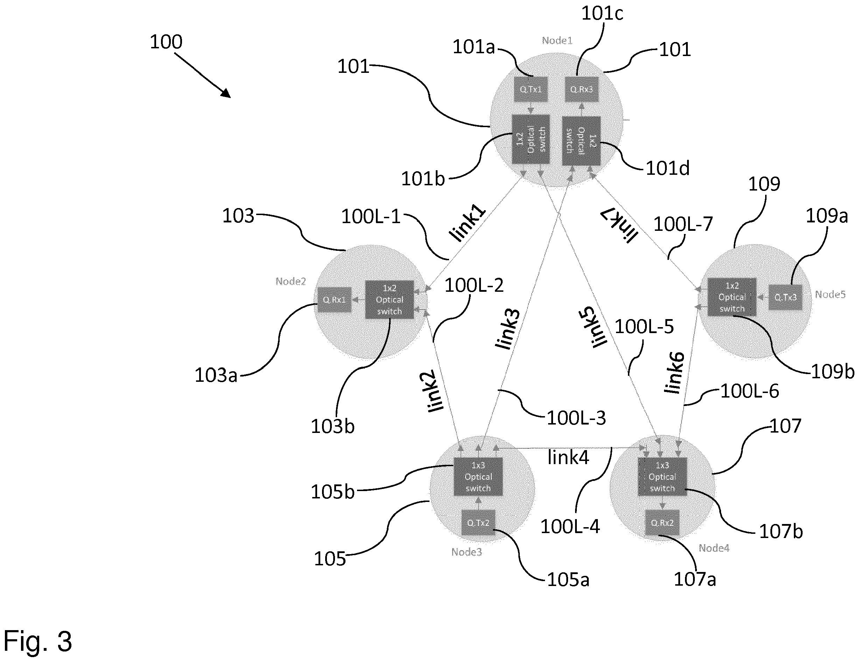

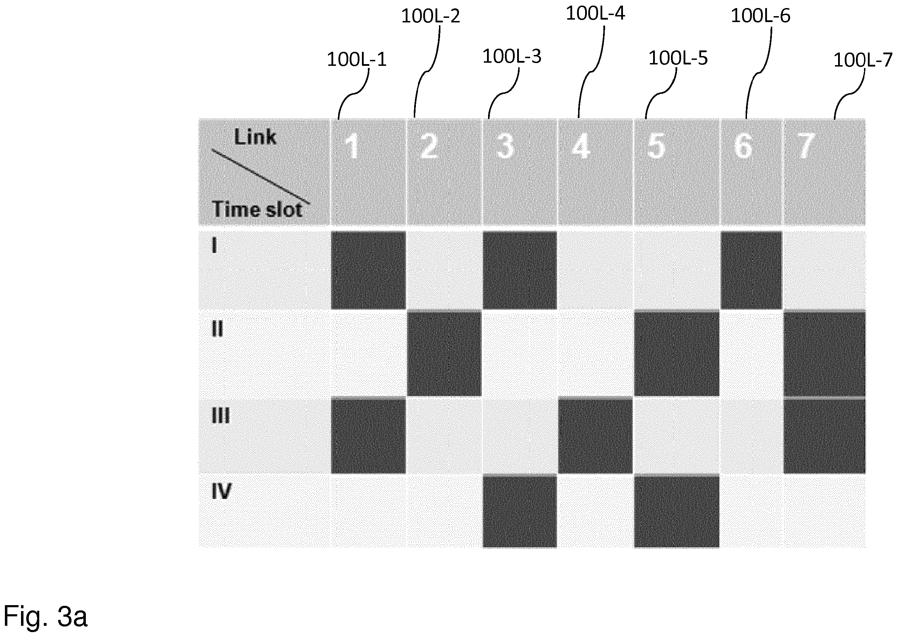

Figure 3 shows a schematic diagram of the quantum key distribution network 100 according to a further embodiment. In the embodiment shown in Fig. 3, the QKD network 100 comprises five nodes 101, 103, 105, 107, and 109 and seven communication links 100L-1, 100L-2, 100L-3, 100L-4, 100L-5, 100L-6 and 100L-7.

This embodiment provides the advantage of reducing the total number of QKD transmitters from seven to three, namely the transmitters 101a, 105a and 101c, and of reducing the total number of the QKD receivers from seven to three namely the receivers 103a, 107a and 109a, compared to the prior art QKD networks, while adding four 1x2 optical switches 101b, 101d, 109b, and 103b and two 1×3 optical switches 105b and 107b. It can be understood that in the real QKD network, the quantity of the QKD transmitters and the QKD receivers is large, for example, 200 QKD transmitters and 200 QKD receivers. Therefore, embodiments of the invention provide the advantage of substantially reducing the total cost issues of QKD transmitters, QKD receivers and switches in the whole multi-node QKD network 100.

Analogously to the embodiment shown in Figs. 1, 1a, 2 and 2a, in this case as well, there are four time slots I, II, III and IV during which some communication links 100L-1, 100L-2, 100L-3 and 100L-4 can operate simultaneously, as shown in Fig. 3a by the black blocks in the time slot allocation table.

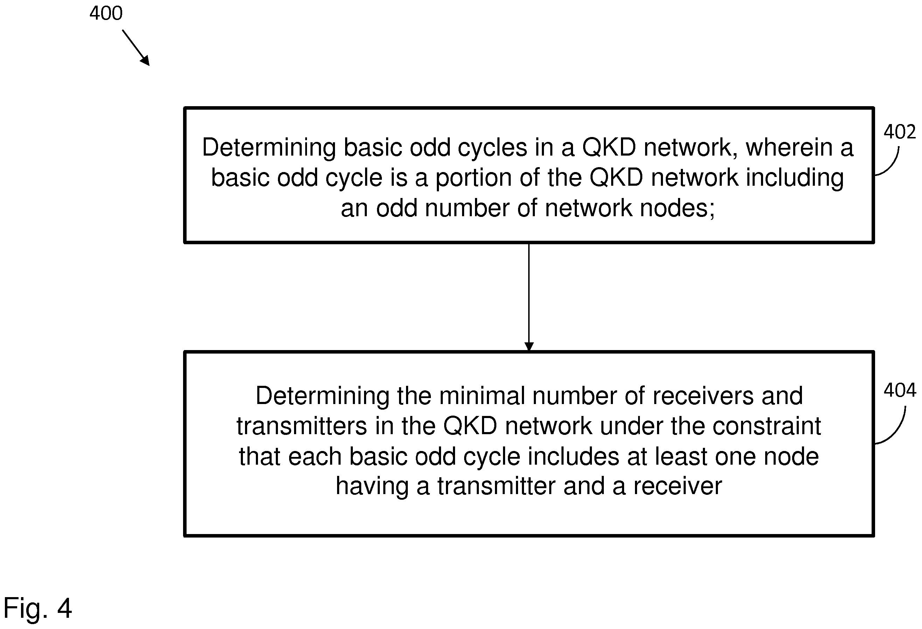

Figure 4 shows a schematic diagram of a method 400 for determining the configuration of the QKD network 100, comprising the set of receiver nodes 103 and 107 and the set of transmitter nodes 101 and 105 and the plurality of the communication links 100L-1, 100L-2, 100L-3 and 100L-4 connecting the plurality of network nodes 101, 103, 105, and 107.

The method 400 comprises the steps of determining 402 basic odd cycles in the QKD network 100, wherein a basic odd cycle is a portion of the QKD network 100 including an odd number of network nodes 101, 103, 105, and 107, and of determining 404 the minimal number of receivers 103a and 107a and transmitters 101a and 105a in the QKD network 100 under the constraint that each basic odd cycle includes at least one node, in particular, one node having a transmitter 101a, 105a and a receiver 103a, 107a. It can be understood that a cycle is a closed sequence of connected nodes, wherein each node appears only once and the node at the beginning of the sequence (start node) is connected to the node at the end of the sequence (end node). An odd cycle is a cycle having an odd number of nodes. A basic cycle is a cycle which does not contain a smaller cycle. A basic odd cycle is an odd cycle which does not contain a smaller cycle.

Furthermore, the step of determining 404 the minimal number of receivers and transmitters per network node can include determining the minimal number of receivers and transmitters per network node on the basis of the following minimization problem (i.e., an integer linear programming formulation):

$$\min \sum_{j=1}^{K} x_j \text{, such that } \sum_{j \in S_i} x_j \geq 1, \text{ for } i = 1, ..., N \text{ and } x_j = 0,1 \text{ for } j = 1, ..., K,$$

wherein $K$ is the number of the plurality of network nodes 101, 103, 105, and 107, $N$ is the number of all basic odd cycles in the QKD network 100, $S_i$ is a set of network nodes forming a basic odd cycle of the QKD network 100, and $x_j = 0$ indicates that the $j$th network node of the plurality of network nodes 101, 103, 105, 107 comprises one transmitter and no receiver or one receiver and no transmitter and $x_j = 1$ indicates that the j-th network node of the plurality of network nodes 101, 103, 105, 107 comprises one transmitter and one receiver. In this way, the total number of QKD transmitters and QKD receivers can be minimized for any given kind of QKD network topology/architecture.

The steps of the method 400 of can be solved efficiently using optimization algorithms such as the simplex method via linear program relaxation.

Embodiments of the method 400 provide the advantage of decreasing the number of QKD transmitters and QKD receivers as a function of the number of nodes L. In particular, for ring QKD networks, embodiments of the invention provide a decrease from L QKD transmitters and L QKD receivers to nearly L/2 QKD transmitters and L/2 QKD receivers.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1.  A quantum key distribution (QKD) network (100), comprising:

    a plurality of network nodes (101, 103, 105, 107); and
    a plurality of communication links (100L-1, 100L-2, 100L-3, 100L-4) connecting the plurality of network nodes (101, 103, 105, 107);
    wherein the plurality of network nodes (101, 103, 105, 107) and the plurality of communication links (100L-1, 100L-2, 100L-3, 100L-4) define a network topology;
    wherein the quantum key distribution (QKD) network (100) is configured to distribute quantum keys between the plurality of network nodes (101, 103, 105, 107);
    wherein at least a first network node (101) of the plurality of network nodes comprises a transmitter (101a) and a first KxM or MxK optical switch (101b) connected to the transmitter (101a) and wherein at least a second network node (103) of the plurality of network nodes comprises a receiver (103a) and a second PxN or NxP optical switch (101b) connected to the receiver (101a), wherein the first optical switch (101b) is connected to the second optical switch (103b) via one of the plurality of communication links (100L-1) in order to allow a communication between the transmitter (101a) of the first network node (101) and the receiver (103a) of the second network node (103) such that the first network node (101) and the second network node (103) share the transmitter (101a) and the receiver (103a), wherein K, P, M, and N are positive integer numbers,
    wherein at least one subset of the plurality of network nodes (101, 103, 105, 107) forms an odd cycle, an odd cycle being a closed sequence of connected nodes,
    wherein at least a third network node in the odd cycle comprises a transmitter and a receiver, wherein anyone of the transmitter and receiver is directly connected to a respective optical switch of a neighboring node,
    wherein the first optical switch (101b) and/or the second optical switch (103b) is a wavelength independent active optical switch,
    wherein each of the plurality of network nodes (101, 103, 105, 107) comprises a receiver, a transmitter or a receiver and a transmitter and wherein the number of receivers and the number of transmitters of each network node is determined by a configuration scheme as a function of the network topology, wherein the configuration scheme is based on a minimization problem which is configured to provide the minimal number of receivers and transmitters in the QKD network (100) under the constraint that each basic odd cycle of the QKD network contains at least one node having a transmitter and a receiver,
    wherein the configuration scheme is based on the following minimization problem:

    min $\sum_{j=1}^{K} x_j$ , such that $\Sigma_{j \in S_i} x_j \geq 1$, for $i$ = 1, ..., $N$ and $x_j$ = 0,1 for $j$ = 1, ..., $K$,

wherein *K* is the number of the plurality of network nodes, *N* is the number of all basic odd cycles in the QKD network, $S_i$ is a set of network nodes forming a basic odd cycle of the QKD network, and $x_j = 0$ indicates that the *j*-th network node of the plurality of network nodes (101, 103, 105, 107) comprises one transmitter and no receiver or one receiver and no transmitter and $x_j = 1$ indicates that the *j*-th network node of the plurality of network nodes (101, 103, 105, 107) comprises one transmitter and one receiver.

2. The QKD network (100) of claim 1, wherein at least a third network node of the plurality of network nodes (101, 103, 105, 107) comprises a transmitter, a receiver and at least one optical switch.

3. The QKD network (100) of any one of the preceding claims, wherein the plurality of network nodes (101, 103, 105, 107) further comprises a set of neighboring receiver nodes (103, 107) and transmitter nodes (101, 105), wherein the neighboring receiver nodes (103, 107) and transmitter nodes (101, 105) are arranged in an alternating fashion.

4. The QKD network (100) of any one of the preceding claims, wherein the QKD network (100) further comprises a control unit configured to control the operation of the plurality of network nodes (101, 103, 105, 107) on the basis of a time-division multiplexing scheme.

**Patentansprüche**

1. Quantenschlüsselverteilungs(quantum key distribution - QKD)-Netzwerk (100), das Folgendes umfasst:

mehrere Netzwerkknoten (101, 103, 105, 107); und
mehrere Übermittlungsabschnitte (100L-1, 100L-2, 100L-3, 100L-4), die die mehreren Netzwerkknoten (101, 103, 105, 107) verbinden;
wobei die mehreren Netzwerkknoten (101, 103, 105, 107) und die mehreren Übermittlungsabschnitte (100L-1, 100L-2, 100L-3, 100L-4) eine Netzwerktopologie definieren;
wobei das Quantenschlüsselverteilungs(QKD)-Netzwerk (100) konfiguriert ist, um Quantenschlüssel zwischen den mehreren Netzwerkknoten (101, 103, 105, 107) zu verteilen;
wobei wenigstens ein erster Netzwerkknoten (101) der mehreren Netzwerkknoten einen Sender (101a) und einen ersten optischen KxM- oder MxK-Schalter (101b) umfasst, der mit dem Sender (101a) verbunden ist, und wobei wenigstens ein zweiter Netzwerkknoten (103) der mehreren Netzwerkknoten einen Empfänger (103a) und einen zweiten optischen PxN- oder NxP-Schalter (101b) umfasst, der mit dem Empfänger (101a) verbunden ist, wobei der erste optische Schalter (101b) mit dem zweiten optischen Schalter (103b) über eine der mehreren Übermittlungsabschnitte (100L-1) verbunden ist, um eine Übermittlung zwischen dem Sender (101a) des ersten Netzwerkknotens (101) und dem Empfänger (103a) des zweiten Netzwerkknotens (103) derart zu ermöglichen, dass der erste Netzwerkknoten (101) und der zweite Netzwerkknoten (103) den Sender (101a) und den Empfänger (103a) gemeinsam nutzen, wobei K, P, M und N positive ganze Zahlen sind,
wobei wenigstens eine Untergruppe der mehreren Netzwerkknoten (101, 103, 105, 107) einen ungeraden Zyklus ausbildet, wobei ein ungerader Zyklus eine geschlossene Sequenz verbundener Knoten ist,
wobei wenigstens ein dritter Netzwerkknoten in dem ungeraden Zyklus einen Sender und einen Empfänger umfasst, wobei einer der Sender und Empfänger mit einem jeweiligen optischen Schalter eines benachbarten Knotens direkt verbunden ist,
wobei der erste optische Schalter (101b) und/oder der zweite optische Schalter (103b) ein wellenlängenunabhängiger aktiver optischer Schalter ist,
wobei jeder der mehreren Netzwerkknoten (101, 103, 105, 107) einen Empfänger, einen Sender oder einen Empfänger und einen Sender umfasst und wobei die Anzahl der Empfänger und die Anzahl der Sender jedes Netzwerkknotens durch ein Konfigurationsschema in Abhängigkeit von der Netzwerktopologie bestimmt wird,
wobei das Konfigurationsschema auf einem Minimierungsproblem basiert, das konfiguriert ist, um die minimale Anzahl von Empfängern und Sendern in dem QKD-Netzwerk (100) unter der Beschränkung, dass jeder ungerade Basiszyklus des QKD-Netzwerks wenigstens einen Knoten enthält, der einen Sender und einen Empfänger aufweist, bereitzustellen,
wobei das Konfigurationsschema auf dem folgenden Minimierungsproblem basiert:

$\min \sum_{j=1}^{k} x_j$ , derart, dass $L_{i \in s_i} x_j \geq 1$, für *i*=1,..., *N* und $x_j$=0, 1 für *j*=1, ... ,K,

wobei K die Anzahl der mehreren Netzwerkknoten ist, N die Anzahl aller ungeraden Basiszyklen in dem QKD-Netzwerk ist, $S_i$ ein Satz von Netzwerkknoten ist, die einen ungeraden Basiszyklus des QKD-Netz-

werks ausbilden, und $x_j$ = 0 angibt, dass der j-te Netzwerkknoten der mehreren Netzwerkknoten (101, 103, 105, 107) einen Sender und keinen Empfänger oder einen Empfänger und keinen Sender umfasst und $x_i$ = 1 angibt, dass der j-te Netzwerkknoten der mehreren Netzwerkknoten (101, 103, 105, 107) einen Sender und einen Empfänger umfasst.

2.  QKD-Netzwerk (100) nach Anspruch 1, wobei wenigstens ein dritter Netzwerkknoten der mehreren Netzwerkknoten (101, 103, 105, 107) einen Sender, einen Empfänger und wenigstens einen optischen Schalter umfasst.

3.  QKD-Netzwerk (100) nach einem der vorhergehenden Ansprüche, wobei die mehreren Netzwerkknoten (101, 103, 105, 107) ferner einen Satz benachbarter Empfängerknoten (103, 107) und Senderknoten (101, 105) umfassen, wobei die benachbarten Empfängerknoten (103, 107) und Senderknoten (101, 105) abwechselnd angeordnet sind.

4.  QKD-Netzwerk (100) nach einem der vorhergehenden Ansprüche, wobei das QKD-Netzwerk (100) ferner eine Steuereinheit umfasst, die konfiguriert ist, um den Betrieb der mehreren Netzwerkknoten (101, 103, 105, 107) auf der Basis von einem Zeitmultiplexschema zu steuern.


**Revendications**

1.  Réseau de distribution quantique de clé (QKD) (100), comprenant :

    une pluralité de noeuds de réseau (101, 103, 105, 107) ; et
    une pluralité de liaisons de communication (100L-1, 100L-2, 100L-3, 100L-4) connectant la pluralité de noeuds de réseau (101, 103, 105, 107) ;
    la pluralité de noeuds de réseau (101, 103, 105, 107) et la pluralité de liaisons de communication (100L-1, 100L-2, 100L-3, 100L-4) définissant une topologie de réseau ;
    le réseau de distribution quantique de clé (QKD) (100) étant configuré pour distribuer des clés quantiques entre la pluralité de noeuds de réseau (101, 103, 105, 107) ;
    au moins un premier noeud de réseau (101) de la pluralité de noeuds de réseau comprenant un émetteur (101a) et un premier commutateur optique KxM ou MxK (101b) connecté à l'émetteur (101a) et au moins un deuxième noeud de réseau (103) de la pluralité de noeuds de réseau comprenant un récepteur (103a) et un second commutateur optique PxN ou NxP (101b) connecté au récepteur (101a), le premier commutateur optique (101b) étant connecté au second commutateur optique (103b) par l'intermédiaire d'une de la pluralité de liaisons de communication (100L-1) afin de permettre une communication entre l'émetteur (101a) du premier noeud de réseau (101) et le récepteur (103a) du deuxième noeud de réseau (103) de telle sorte que le premier noeud de réseau (101) et le deuxième noeud de réseau (103) partagent l'émetteur (101a) et le récepteur (103a), K, P, M et N étant des nombres entiers positifs,
    au moins un sous-ensemble de la pluralité de noeuds de réseau (101, 103, 105, 107) formant un cycle impair, un cycle impair étant une séquence fermée de noeuds connectés,
    au moins un troisième noeud de réseau dans le cycle impair comprenant un émetteur et un récepteur, l'un quelconque de l'émetteur et du récepteur étant directement connecté à un commutateur optique respectif d'un noeud voisin,
    le premier commutateur optique (101b) et/ou le second commutateur optique (103b) étant un commutateur optique actif indépendant de longueur d'onde,
    chacun de la pluralité de noeuds de réseau (101, 103, 105, 107) comprenant un récepteur, un émetteur ou un récepteur et un émetteur et le nombre de récepteurs et le nombre d'émetteurs de chaque noeud de réseau étant déterminé par un schéma de configuration en fonction de la topologie du réseau, le schéma de configuration étant basé sur un problème de minimisation qui est configuré pour fournir le nombre minimal de récepteurs et d'émetteurs dans le réseau QKD (100) sous la contrainte que chaque cycle impair de base du réseau QKD contient au moins un noeud ayant un émetteur et un récepteur,
    le schéma de configuration étant basé sur le problème de minimisation suivant :

    min Ejt $_{1 Xj}$, tel que $\pounds_{jé?s}, x_j \geq 1$, pour i = 1,..., N et $x_j$ = 0,1 pour $j$ = 1,..., $K$,
    K étant le nombre de la pluralité de noeuds de réseau, N étant le nombre de tous les cycles impairs de base dans le réseau QKD, $S_i$ étant un ensemble de noeuds de réseau formant un cycle impair de base du réseau QKD, et $x_i$= 0 indiquant que le j-ème noeud de réseau de la pluralité de noeuds de réseau (101, 103, 105, 107) comprend un émetteur et aucun récepteur ou un récepteur et aucun émetteur et $x_y$ = 1 indiquant que le j-ème noeud de réseau de la pluralité de noeuds de réseau (101, 103, 105, 107) comprennent un émetteur et un récepteur.

2. Réseau QKD (100) selon la revendication 1, dans lequel au moins un troisième noeud de réseau de la pluralité de noeuds de réseau (101, 103, 105, 107) comprend un émetteur, un récepteur et au moins un commutateur optique.

3. Réseau QKD (100) selon l'une quelconque des revendications précédentes, dans lequel la pluralité de noeuds de réseau (101, 103, 105, 107) comprend en outre un ensemble de noeuds récepteurs voisins (103, 107) et de noeuds émetteurs (101, 105), les noeuds récepteurs (103, 107) et les noeuds émetteurs (101, 105) voisins étant disposés en alternance.

4. Réseau QKD (100) selon l'une quelconque des revendications précédentes, dans lequel le réseau QKD (100) comprend en outre une unité de commande configurée pour commander le fonctionnement de la pluralité de noeuds de réseau (101, 103, 105, 107) sur la base d'un schéma de multiplexage par répartition dans le temps.

Fig. 1

100L-1  100L-2  100L-3  100L-4

| Link / Time slot | 1 | 2 | 3 | 4 |
|---|---|---|---|---|
| I |  |  |  |  |
| II |  |  |  |  |

Fig. 1a

Fig. 2

EP 3 625 926 B1

Fig. 2a

Fig. 3

Fig. 3a

400

Determining basic odd cycles in a QKD network, wherein a basic odd cycle is a portion of the QKD network including an odd number of network nodes;

402

Determining the minimal number of receivers and transmitters in the QKD network under the constraint that each basic odd cycle includes at least one node having a transmitter and a receiver

404

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2471470 A
- CN 103200105 B

- GB 2534917 A

**Non-patent literature cited in the description**

- The security of practical quantum key distribution. *Rev. Mod. Phys.,* vol. 81, 1301
- The SECOQC quantum key distribution network in Vienna. *New Journal of Physics,* vol. 11
- Field test of quantum key distribution in the Tokyo QKD Network. *OPTICS EXPRESS,* vol. 19 (11), 10387
- A quantum access network. *NATURE,* vol. 501, 69

- **BAYRAMPOUR HODJAT et al.** *Optimization of quantum networks using novel non-blocking optical switches*
- **CHAPURANT E et al.** *Compatibility of quantum key distribution with optical networking*
- **HAO WEN.** *An Evaluation Model of the optical quantum communication network*